# EUROPEAN PATENT APPLICATION

(11) **EP 4 393 974 A1**
(43) Date of publication of application: **03.07.2024**
(21) Application number: 22216798.3
(22) Date of filing: 27.12.2022
(51) Int. Cl.: C08G 18/24, B32B 27/06, C08G 18/32, C08G 18/36, C08G 18/48, C08G 18/76, C08J 9/18, E04F 15/00

(54) **USE OF INFINERGY FOAM PARTICLES FOR THE IMPROVEMENT OF THE SOUND-DEADENING EFFECT FOR FLOORING APPLICATIONS**

(71) Applicant: BASF SE, 67056 Ludwigshafen am Rhein (DE); Construction Research & Technology GmbH, 83308 Trostberg (DE)
(72) Inventor: SHARMAK, Anna, 26123 Oldenburg (DE); JANSSEN, Olaf, 40589 Duesseldorf (DE); WALTHER, Burkhard, 26123 Oldenburg (DE); THIELBEER, Frank, 49448 Lemfoerde (DE); SCHMIDT, Lisa Marie, 49448 Lemfoerde (DE); HUELSMANN, Theresa, 49074 Osnabrueck (DE); POESELT, Elmar, 49448 Lemfoerde (DE); RAPP, Florian Tobias, 67056 Ludwigshafen am Rhein (DE)
(74) Representative: Altmann, Andreas

(57) **Abstract**

The present invention is directed to a process for manufacture of a flooring, at least comprising the steps of applying a primer composition to a surface and permitting the primer composition to at least partially dry to form a layer (LP); applying a composition (C) suitable to form a layer (L) comprising foamed particles comprising a thermoplastic polyurethane to the layer (LP); and applying a reactive coating composition to the layer (L) comprising foamed particles and permitting the reactive coating composition to react and at least partially dry to form a layer (LB). The present invention also relates to a flooring obtained by a process according to the present invention and the use of foamed particles comprising a thermoplastic polyurethane in a flooring.

## Description

The present invention is directed to a process for manufacture of a flooring or paneling for a wall at least comprising the steps of optionally applying a primer composition to a surface and permitting the primer composition to at least partially dry to form a layer (LP); applying a composition (C) suitable to form a layer (L) comprising foamed particles comprising a thermoplastic polyurethane to the layer (LP); and applying a reactive coating composition to the layer (L) comprising foamed particles and permitting the reactive coating composition to react and at least partially dry to form a layer (LB). The present invention also relates to a flooring obtained by a process according to the present invention and the use of foamed particles comprising a thermoplastic polyurethane in a flooring.

Polyurethane systems used in flooring and coating applications are in principle known in the state of the art. They are for example applied in indoor flooring e.g. for homes for elderly people, hospitals, offices, schools, incidental residential projects.

Depending on the application, the properties have to be adapted. Known compositions are for example sound deadening, elastic, satin matt, bacteriostatic, low emission polyurethane systems. To adjust the properties of a coating, typically different layers are applied.

For known elastic coatings, the problem often is the indentation sensitivity, which makes its use over long time critical. Polyurethane foams may possibly be used as sound deadener. However, foams have the disadvantage that automated application of the liquid components is difficult because the resulting foaming grade must be reached and may be difficult to attain in instances where there is limited assembly space. In particular for flooring applications, it is crucial that the resulting layers have a defined thickness.

There is a strong need to find a material that provides good resilience and at the same time good sound deadening properties and which preferably can also be used in combination with known polyurethane systems in flooring systems. It was an object of the present invention to provide suitable systems and also processes for the manufacture of flooring and coatings which combine good sound deadening properties and good resilience.

According to the present invention, this problem has been solved by a process for manufacture of a flooring or paneling for a wall, at least comprising the steps of
(i) optionally applying a primer composition to a surface and permitting the primer composition to at least partially dry to form a layer (LP);
(ii) applying a composition (C) suitable to form a layer (L) comprising foamed particles comprising a thermoplastic polyurethane to the layer (LP) or to a surface;
(iii) applying a reactive coating composition to the layer (L) permitting the reactive coating composition to react and at least partially dry to form a layer (LB).

It was surprisingly found that the use of layers comprising foamed particles comprising a thermoplastic polyurethane in combination with one or more further coating layers provides a coating with an improved combination of mechanical and dampening properties. It has been surprisingly found that the combination of sound deadening properties and the recovery behavior of the layer comprising foamed particles comprising a thermoplastic polyurethane result in a coating with reduced vertical floor deformation and increased sound-deadening performance.

The process of the present invention comprises optionally step (i) and comprises steps (ii) and (iii). According to step (i), a primer composition is applied to a surface and the primer composition is permitted to at least partially dry to form a layer (LP). In case the surface is suitable, it might not be necessary to apply the primer composition according to the present invention. The composition (C) forming the layer (L) might for example be directly applied to a smooth surface, for example a surface consisting of fiber cement.

In the context of the present invention, the surface typically is a floor. According to a further embodiment, the present invention therefore is also directed to a process for manufacture of a flooring as disclosed above, wherein the surface is a floor.

In case a primer composition is applied to the surface, it might be applied directly to the surface or the surface might be treated prior to the application. Suitable primer compositions, for example primer compositions based on urethanes or epoxy resins are in principle known to the person skilled in the art. Suitable compositions are for example available under the trade names MasterTop P622 or MasterSeal P770. According to a further embodiment, the present invention therefore is also directed to a process for manufacture of a flooring as disclosed above, wherein the primer composition is an epoxy or urethane based primer composition.

In case a primer composition is applied to the surface, it is typically applied in an amount which results in a thickness of the layer (LP) in the range of from 0.01 to 1 mm, preferably in the range of from 0.03 to 0.5 mm.

According to a further embodiment, the present invention therefore is also directed to a process for manufacture of a flooring as disclosed above, wherein the primer layer, when dried, has a thickness in the range o from 0.01 mm to 1 mm.

The process further comprises step (ii) of applying a composition (C) suitable to form a layer (L) comprising foamed particles comprising a thermoplastic polyurethane to the layer (LP) or to a surface, preferably a floor. The composition (C) suitable to form a layer (L) may for example be a reactive composition which comprises the foamed particles. The composition (C) may also comprise the foamed particles in fused form, i.e. it may essentially consist of the foamed particles in the context of the present invention.

The layer (L) may comprise the foamed particles comprising a thermoplastic polyurethane and comprise further components such as for example a polyurethane. According to the present invention, the layer (L) may also essentially consist of the foamed particles, in particular of fused foamed particles.

According to step (iii), a reactive coating composition is applied to the layer (L). Layer (L) comprises foamed particles. Usually, the reactive coating applied to the layer (L) is free of foamed particles. The reactive coating composition to is then permitted to react and at least partially dry to form a layer (LB).

The resulting flooring thus at least comprises layers (L) and (LB) but may also comprise a third layer (LP).

The process of the present invention may also comprise further steps and thus, the resulting flooring may also comprise further layers. According to the present invention, it is for example possible to apply a second layer on top of layer (LP) which is similar to layer (LB) but has for example a different hardness and/or UV stability.

The process of the present invention may in particular comprise further steps of applying one or more layers to adjust the properties of the resulting flooring for a specific application. It is for example possible to apply further layers comprising fillers or dyes to adjust the properties of the resulting flooring.

According to a further embodiment, the present invention therefore is also directed to a process for manufacture of a flooring as disclosed above, further comprising a step (iv):
(iv) applying a second reactive coating composition and permitting the reactive coating composition to react and at least partially dry to form a layer (LT).

Layer (LT) typically is a thin layer coating for example to improve the hardness and/or UV stability and/or cleanability.

In the context of the present invention, known compositions used in flooring applications may be used, for example compositions comprising reactive epoxy systems or reactive polyurethane systems. Suitable reactive compositions are in principle known to the person skilled in the art. The composition used in the context of the present invention may for example be reactive compositions to form polyurethanes.

According to a further embodiment, the present invention therefore is also directed to a process for manufacture of a flooring as disclosed above, wherein the reactive coating composition and/or the second reactive coating composition is a reactive compositions to form a polyurethane.

According to the present invention, the composition (C) comprises foamed particles comprising a thermoplastic polyurethane. The foamed particles may be used as loose particles in the context of the present invention or in fused form. Therefore, according to one embodiment, the present invention is also directed to a process for manufacture of a flooring as disclosed above, wherein the composition (C) comprises fused foamed particles comprising a thermoplastic polyurethane. According to an alternative embodiment, the present invention is also directed to a process for manufacture of a flooring as disclosed above, wherein the composition (C) comprises a reactive coating composition and foamed particles comprising a thermoplastic polyurethane.

It can be advantageous to use foamed particles having an average length in the range from 1 to 8 mm, preferably in the range of from 1 to 6 mm, in particular in the range of from 2 to 6 mm, more preferable in the range of from 3 to 5 mm. Preferably, the ratio of the average length of the particles to the average width of the particles is in the range of from 1.0 to 1.7, more preferable in the range of from 1.0 to 1.3. The bulk density of the foamed particles is, for example, in the range from 20 g/l to 300 g/l.

The shape of the particles used in the process according to the present invention may vary. It is possible to use rounded, non-spherical, e.g. elongated or cylindrical particles as well as particles with e.g. flatted surface spots.

According to the present invention, the foamed particles may also be fused. Fusing the foamed particles is preferably carried out in a mold to shape the molded body obtained. In principle, all suitable methods for fusing foamed particles can be used according to the present invention, for example fusing at elevated temperatures, such as for example steam chest molding, molding at high frequencies, for example using electromagnetic radiation, processes using a double belt press, or variotherm processes.

Processes for producing foamed particles from thermoplastic elastomers, in particular thermoplastic polyurethanes, are known per se to the person skilled in the art. Suitable materials and the preparation thereof are for example disclosed in WO 2007/82838, WO 2013/153190 or WO 2015/052265.

According to the present invention, the foamed particles can be used as loose particles. The loose particles are preferably used in a composition which furthermore comprises a reactive composition suitable to form a layer. Suitable reactive compositions are in principle known in the state of the art. Reactive compositions may for example be based on polyurethane systems, for example a two component polyurethane system or also on other suitable reactive systems such as for example based on epoxy systems.

Suitable reactive compositions may for example comprise a component A and a component B. Typically, component A comprises a polyol and component B comprises an isocyanate. Either component A or component B or both components may comprise further additives.

Component A typically comprises one or more polyols. In addition, it may comprise one or more of a filler, a polyurethane polymerization catalyst, a rheological additive, a flame retardant, an adhesion promoter and a drying agent. Further conventional additives, like colorants and antioxidants may also be comprised in component A. Component B typically comprises the isocyanate for forming the polyurethane. In addition, it may comprise a filler, a polyurethane polymerization catalyst, a flame retardant and/or a rheological additive. Further conventional additives, like colorants and antioxidants may also be comprised in component B.

Composition (C) applied in step (ii) of the process of the present invention may be obtained by mixing components A and B and the foamed particles in suitable amounts, to form a mixture comprising the polyol, the isocyanate, and the foamed particles comprising a thermoplastic polyurethane. The mixture may be applied to a surface or to the layer (LP) to form a coating from the mixture; and allowing the applied coating to cure.

Typically, composition (C) comprises the famed particles in an amount of from 1 to 99% by weight, preferably 2 to 50% by weight, more preferable 5 to 25% by weight, in particular 7 to 15% by weight.

According to a further embodiment, the foamed particles may also be applied in form of a mat.

The steps of applying the coating and allowing the applied coating to cure are usually performed at an ambient temperature from 0°C to 100°C. Preferably, the mixture can be applied at an ambient temperature i.e. it is not heated prior to application. Ambient temperature can be in the range from 5°C to 40°C, or even from 10°C to 30°C. The coating preferably is also cured at ambient temperature.

Suitable reactive compositions to form a polyurethane are in principle known. A suitable component A may comprise one or more polyols, fillers and additives and a polyurethane polymerization catalyst, preferably in the amounts of 20 to 60 vol.% of the filler and/or additives, more than 0 and up to 2 vol.% of the polyurethane polymerization catalyst, and the balance adding up to 100 vol% being polyol, and as optional components: 0 to 3 vol.% of a rheological additive, 0 to 3 vol.% of an adhesion promoter, 0 to 3 vol.% of a drying agent, 0 to 2 vol.% of a dispersing additive and 0 to 30 vol. -% of a flame retardant. Typically, component B comprises more than 0 and up to 100 vol.% of one or more isocyanates, and as optional components 0 to 50 vol.% of a filler, and 0 to 6 vol.% of a rheological additive; and the vol. % are in relation to the total volume of the component. Typically, the mixing ratio of component A to component B is in the range of from 1 : 1 to 8 : 1 by volume, preferably from 2 : 1 to 6: 1 by volume, more preferably from 3: 1 to 5.5: 1 by volume, more preferably from 3: 1 to 5: 1 by volume.

Suitable polyols and isocyanates are in principle known to the person skilled in the art. The polyol preferably has a hydroxyl functionality from 1.5, 2, or 3, to 3.5, 4, or 6, or a value between any pair of the foregoing values. For example, suitable polyols may be those having a hydroxyl functionality of at least 1.5, at least 2, at least 3, to no greater than 6, or even no greater than 3.5. Within these constraints, useful polyol(s) have hydroxyl numbers that vary over a wide range including, e.g., from 2 to 1200, or from 25 to 1000, or from 80 to 1000. The polyol (independently of its type) preferably has a number average molecular weight (Mn) of no less than 100 g/mol, more preferably from 100 g/mol to 18,000 g/mol. A range from 100 g/mol to 12000 g/mol is even more preferred, more preferably from 100 g/mol to 6000 g/mol, even more preferably from 100 g/mol to 4000 g/mol.

The polyol is preferably liquid at ambient temperature. Examples of useful classes of polyols include polyether polyols, polyester polyols, polyether/polyester polyols, polycarbonate polyols, polybutadiene polyols, hydroxyl functional natural oil polyols, and combinations thereof.

Useful polyether polyols can be obtained from the polymerization of a cyclic ether, e.g., ethylene oxide, propylene oxide, butylene oxide, and tetrahydrofuran, or by the addition of one or more such oxides to polyfunctional Initiators having at least two active hydrogens including, e.g., water, polyhydric alcohols (e.g., ethylene glycol, propylene glycol, diethylene glycol, cyclohexane dimethanol, glycerol, trimethylolpropane, pentaerythritol and bisphenol A), ethylenediamine, propylenediamine, triethanolamine, and 1,2-propanedithiol. Particularly useful polyether polyols include, e.g., polyoxypropylene diols and triols, poly(oxyethylene-oxypropylene) diols and triols obtained by the simultaneous or sequential addition of ethylene oxide and propylene oxide to appropriate Initiators, and polytetramethylene ether glycols obtained by the polymerization of tetrahydrofuran. Examples of preferred polyether polyols include a poly(alkylene oxide), such as polypropylene oxide), polyethylene oxide) and ethylene oxide/propylene oxide copolymer, with polypropylene oxide). Preferably, polypropylenglycol-polyols, polyester-ether-polyols, polyteramethylenglykol-polyols and mixtures thereof of prepolymers prepared thereof are used.

Suitable commercially available polyether polyols are available under a variety' of trade designations including, e.g., under the VORANOL^{®} series of trade designations including, e.g., VORANOL 220-56, VORANOL 220-110, VORANOL 220-260, VORANOL 230-56, VORANOL 230-1 10, and VORANOL 230-238 from Dow- Chemical Co. (Midland, Michigan), or the DESMOPHEN^{®} series, e.g. DESMOPHEN 1380 BT, 1381 BT, 1400 BT, 2060 BD, 2061 BD, 3061 BT, 4011 T, 4028 BD, available from Covestro, Germany or Lupranol series, such as e.g. Lupranol 1000/1, Lupranol 1000/2, Lupranol 2070 etc., available from BASF, Ludwigshafen, Germany.

Useful polyester polyols include those polyester polyols prepared from the reaction product of polycarboxylic acids, their anhydrides, their esters or their halides, and a stoichiometric excess polyhydric alcohol. Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methyl-hexahydrophthalic acid, methyl-hexahydrophthalic anhydride, methyl- tetrahydrophthalic acid, methyl-tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, pimeilic acid, suberic acid, azelaic acid, sebacic acid, 1,2,4-butane- tricarboxylic acid, decanedicarboxylic acid, octadecanedicarboxylic acid, oxalic acid, dimerized fatty acids, trimerie fatty acids, and fumaric acid), alicyclic dicarboxylic acids (e.g. 1 ,3-cyclohexanedicarboxylic acid, and 1,4- cyciohexanedicarboxylic acid), and combinations thereof.

Suitable commercially available polyester polyols are available under a variety of trade designations including, e.g., under the STEPANPOL series of trade designations including, e.g., BC180,PC101 1 -55, PC 1011-210, PC-1017P-55, PC- 1028P-210, PC-1040P-55, PC-107-1 10, PC-2011-225, PC-2019-55, PC-207-125, PC-5040-167, PC-5070P--56, PD-195.PD320, PDP-70, and PS-2002 (from Stepan Company of Evansville, Illinois)or under the Sovermol series, e.g. Sovermol 908, Sovermol 750, Sovermol 805 from BASF, Düsseldorf, Germany.

Examples of suitable polyhydric alcohols (i.e., polyols) from which the polyester polyols can be derived include aliphatic polyols, e.g., ethylene glycols, propane diols (e.g., 1, 2-propanediol and 1 ,3-propanediol), butane diols (e.g., 1 ,3-butanediol, 1 ,4- butanediol, and 1,2-butanediol), 1,3-butenediol, 1 ,4-butenediol, 1 ,4-butynediol, pentane diols (e.g., 1,5-pentanediol), pentenediols, pentynediols, 1 ,6-hexanediol, 1,8- octanediol, 1 ,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4- cyclohexanedimethanol, 1 ,4-cyclohexanediol, dimer diols, hydrogenated bisphenol A, hydrogenated bisphenol F, polycaprolactone polyols, tetramethylene glycol, polytetramethylene glycol, 3 -methyl- 1,5-pentanediol, 1,9-nonanediol, 2-methyl-1,8- octanediol, trimethylolpropane, glycerin, pentaerythritol, sorbitol, glucose, and combinations thereof.

Suitable natural oil polyols have hydroxyl functionality of from 1 to 8, and preferably from 1.5 to 4. Examples of suitable natural oil polyols include hydroxy functionalized oils or hydroxy functional triglycerides that are isolated from, derived from, or manufactured from natural oils including animal and vegetable oils, preferably vegetable oils. Examples of vegetable and animal oils that may be used include soybean oil, safflower oil, linseed oil, corn oil, sunflower oil, castor oil, olive oil, canola oil, sesame oil, cottonseed oil, palm oil, rapeseed oil, tung oil, fish oil, and blends thereof. Other suitable oil polyols include polyols derived from modified natural oils including, e.g., partially hydrogenated natural oils, natural epoxidized oils, genetically modified natural oils, and combinations thereof. Castor oil is a preferred natural oil in the context of present application.

Suitable polycarbonate polyols include e.g., polycarbonate polyols derived from dimethyl carbonate and a polyol, suitable examples of which include aliphatic polyols, e.g., ethylene glycols propylene glycols, propane diols (e.g., 1 ,2- propanediol and 1,3-propanediol), butane diols (e.g., 1,3-butanedioi, 1 ,4-butanedioi, and 1,2-butanediol), 1,3-butenediol, 1 ,4-butenediol 1 ,4-butynediol, pentane diols (e.g., 1,5-pentanediol), pentenediols, pentynediols, 1,6-hexanediol, 1,8-octanediol, 1,10-decanediol, neopentyl glycol, diethylene glycol triethylene glycol, tetraethylene glycol, polyethylene glycols, propylene glycol, polypropylene glycols (e.g., dipropylene glycol and tripropylene glycol), neopentyl glycol, 1 ,4- cyclohexanedimethanol, 1,4-cyclohexanedioi, dimer diols bisphenol A, bisphenol F, hydrogenated bisphenol A, hydrogenated bisphenol F, tetramethylene glycol, polytetramethylene glycol, 3 -methyl- 1,5-pentanediol, 1,9-nonanediol, 2-methyl-1,8- octanediol, trimethylolpropane, glycerin, pentaerythritol, sorbitol, glucose, and combinations thereof, as well as polyols derived from organic oxides such as ethylene oxide and propylene oxide.

Diols and triols may be used as chain extenders or chain branchers in component A, for example to adjust a low NCO/OH ratio by increasing the number of OH-groups available.

The total polyol content of component A is typically in the range from 5 to 80 wt.%, preferably in the range from 10 to 70 wt.%, even more preferably in the range from 20 to 60 wt %. The total filler content of component A, if filler is present in A, can be from more than 0 and up to 95 wt.%, preferably in the range from 20 to 80 wt.%, more preferably in the range from 40 to 70 wt.%. For example aluminum hydroxide or graphite may be used as fillers.

The isocyanate used in component B may be any isocyanate which is conventionally used for polyurethane preparation in the art, or a combination of two or more of said conventional isocyanates. Such conventional isocyanate may be selected from the group consisting of monomeric diisocyanates, polymeric isocyanates and isocyanate prepolymers. The isocyanate can generally be a polyfunctional isocyanate with a functionality of about 2 or more, such as 2.1 or more, 2.3 or more, 2.5 or more, or even 4 or more. In some embodiments, the functionality is about 2. The isocyanate can be aromatic or aliphatic. Representative examples of aromatic isocyanates include diphenyl methane-diisocyanate (MDI), tetramethyl xylylene diisocyanate, naphthalene diisocyanate, toluene diisocyanate. Representative examples of aliphatic diisocyanates include hexamethylene diisocyanate, isophorone diisocyanate, hydrogenated MDI, dodecane diisocyanate, dimer diisocyanate and all trimeric or polymeric isocyanates. In embodiments, the isocyanate can include MDI, tetramethylxylylene diisocyanate, isophorone diisocyanate, toluene diisocyanate, hexamethylene diisocyanate or combinations thereof. In some embodiments, the isocyanate can comprise MDI. In one embodiment, the isocyanate is based on MDI. Component B may comprise a mixture of two or more isocyanates.

Preferably, the isocyanate used in component B is a polymeric isocyanate. Polymeric isocyanate generally has a functionality that is greater than about 2; in some embodiments at least about 2.3; in some embodiments greater than about 2.5; and in some embodiments about 2.7. The functionality of polymeric MDI can be an indication of the expected cross-link density in end use applications. Polymeric isocyanate is generally a mixture of isocyanate compounds. In embodiments, polymeric MDI can be a mixture of MDI (a diisocyanate), and higher functionality isocyanate polymers. For example, polymeric MDI can be a mixture of MDI (diisocyanate), triisocyanate, tetra-isocyanate, penta-isocyanate, higher homologues, or combinations thereof.

Preferably, said polymeric isocyanate includes at least one of polymeric isocyanates based on MDI (4,4 '-MDI), MDI-isomers (2 4'-MDI, 2,2 '-MDI), higher functional homologues (PMDI) or prepolymers thereof, and combinations thereof. More preferably the isocyanate is at least one of or a mixture of diphenylmethane-4,4'- diisocyanate (4,4'-MDI) with MDI-isomers (2,4' -MDI, 2,2 'MDI) and higher functional homologues (PMDI), for example those sold under the tradename DESMODUR^{®} (available from Covestro AG, Germany). Isocyanates based on MDI may be preferred because they have a relatively low toxicity because of their low vapour pressure at room temperature compared to other aromatic isocyanates like TDX or XDI or aliphatic isocyanates like PDI or HDI. They further have a fast reactivity because they are aromatic isocyanates. Their low price and good adhesion properties are further advantages.

In a typical embodiment of the present invention, component B consists of the isocyanate. However, it is also possible to add additives to the isocyanate, preferably additives selected from the group consisting of fillers, flame retardants and rheological additives. If component B contains one or more of these additives, the balance to 100 wt. % is made up by the isocyanate.

Further conventional additives, like colorants and antioxidants may also be comprised in component B.

Components A and B are mixed at the desired ratio and the foamed particles comprising a thermoplastic polyurethane are added for the preparation of composition (C). Upon mixing of the two components A and B, polymerization starts and the polyurethane is formed. The composition and the mixing ratio of component A and B in the mixture can be varied such that an equivalent ratio of isocyanate groups to polyol hydroxy groups as desired for the particular application is obtained. While components A and B, depending in their individual composition may be mixed in any ratio to obtain a NCO/OH ratio from 0.55 to 1.2, typically, the mixing ratio of component A to component B is in the range of from 1.1: 1 to 8: 1 by volume. Preferably the mixing ratio of component A to component B is from 1: 1 to 6: 1 by volume, more preferably from 2: 1 to 5: 1 by volume, more preferably from 2: 1 to 4: 1 by volume.

The composition (C) applied according to the present invention can be applied to form a layer having a thickness from about 0.5 mm, 1.0 mm, 2.0 mm, or about 3.0 to about 5.0 mm, 10 mm, 15 mm 20 mm, or a thickness between any pair of the foregoing values. A suitable thickness may preferably be a thickness within a range from 3 mm to 12 mm, preferably from 4 mm to 10 mm, more preferably from 4 mm to 8 mm.

In addition to the components mentioned, the coating compositions according to the invention can contain auxiliaries and additives customary in coating technology, such as fillers, pigments, plasticizers, curing catalysts, UV stabilizers, antioxidants, microbicides, algicides, water scavengers, thixotropy carriers, wetting agents, flow control agents, matting agents, anti-slip agents, air release agents or extenders.

The coating compositions of the invention can be applied in high layer thicknesses of, for example, up to 12 mm by methods known per se, such as spraying, rolling or spatula.

Preferably, the composition (C) is applied in an amount resulting in a layer (L) with a thickness in the range of from 3 to 12 mm, in particular in the range of from 4 to 10 mm, more preferred in the range of from 4 to 6 mm.

According to a further embodiment, the present invention therefore is also directed to a process for manufacture of a flooring as disclosed above, wherein layer (L) has a thickness in the range of from 3 to 12 mm.

According to the present invention, composition (C) may also comprise fused foamed particles comprising a thermoplastic polyurethane. It is also possible that the layer (L) essentially consists of fused foamed particles comprising a thermoplastic polyurethane, i.e. the particles are applied as a preformed layer.

Thus, in the context of the present invention, the layer (L) may be prepared from a layer comprising fused foamed particles. Processes to prepare polymeric layers comprising fused foamed particles comprising a thermoplastic polyurethane are in principle known from the state of the art.

For example processes to manufacture E-TPU sheets are for example continuous processes (rotary process), which are known from WO 2015/0124587. Suitable sheets preferably have a thickness in the range of 1 mm to 5 mm, in particular 1 mm, 2 mm, 3 mm, 4 mm, or 5 mm. In the context of the present invention it is also possible to prepare sheets of a suitable thickness by cutting sheets of a higher thickness.

Suitable sheets are in the context of the present invention those whose expansion in two dimensions is much greater than in the third dimension; for example, width and length of flat substrate, can each exceed the thickness by at least a factor of 100 and preferably by at least a factor of 1000. The dimensions of the sheets can be adjusted for a given application.

Also sheets of different sizes may be applied to the surface r the primer layer which then may be combined by gluing or fusing. Thus, the present invention is also directed to a process as disclosed above, wherein the mats or sheets are joined by fusing or gluing.

The sheets can also comprise additives. Suitable additives can, for example, be chosen from plasticizers, impact modifiers, stabilizers, colorants, fillers, reinforcing materials, flame retardants, light stabilizers and waxes. For example, polystyrene is a suitable additive.

In the context of the present invention, the fused foamed parties used to form the layer (L) may be applied in the form of sheets without further additives. However, in the context of the present invention it is also possible that for example gaps between one or more sheets are filled with a suitable reactive composition, for example a reactive polyurethane composition.

It has surprisingly been found that the layers can be applied and do not need to be flattened before an additional layer is applied thus reducing the overall time of the process for preparing the layered structure of the flooring.

According to the present invention, in step (iii) a further reactive composition is applied. Suitable reactive compositions are in principle known to the person skilled in the art. Suitable reactive compositions may for example be two component reactive polyurethane compositions or also epoxy based compositions. The reactive composition applied may be based on components A and B as disclosed above. The components may be varied with respect to the properties of the resulting layer (LB). Typically, the layer (LB) is free of foamed particles.

Typically, the reactive composition is applied in step (iii) in a thickness in the range of from 0.5 to 5 mm, preferably in a range of from 1 to 3 mm.

According to a further embodiment, the present invention therefore is also directed to a process for manufacture of a flooring as disclosed above, wherein in step (iii) the reactive composition is applied in a thickness in the range of 0.5 to 5 mm.

According to the present invention, it is also possible that additional layers such as for example a topcoat are applied on the layer (LB). Suitable compositions are in principle known to the person skilled in the art.

According to the present invention, a flooring is obtained which comprises at least the layers (L) and (LB) and may comprise further layers. It has been surprisingly found that the combination of the layers (L) and (LB) according to the present invention allows for a reduction in time needed to apply the combined layers of the flooring system and results in a flooring which has improved mechanical properties in combination with good sound-deadening properties.

According to a further aspect, the present invention is also directed to a flooring obtained by a process for manufacture of a flooring as disclosed above.

As disclosed above, the process of the present invention results in a flooring comprising a layer (L) which comprises foamed particles comprising a thermoplastic polyurethane. The layer may also essentially consist of the foamed particles comprising a thermoplastic polyurethane.

According to a further embodiment, the present invention therefore is also directed to a flooring as disclosed above comprising a continuous layer which essentially consists of fused foamed particles comprising a thermoplastic polyurethane.

According to a further aspect, the present invention therefore is also directed to the use of fused foamed particles comprising a thermoplastic polyurethane in a flooring.

With respect to the preferred embodiments, reference is made to the disclosure above. The foamed particles comprising a thermoplastic polyurethane may be used in a flooring in form of loose particles or in form of fused foamed particles, for example in form of a layer comprising fused foamed particles as disclosed above.

The present invention is further illustrated by the following set of embodiments and combinations of embodiments resulting from the dependencies and back-references as indicated. In particular, it is noted that in each instance where a range of embodiments is mentioned, for example in the context of a term such as "The ... of any one of embodiments 1 to 4", every embodiment in this range is meant to be explicitly disclosed for the skilled person, i.e. the wording of this term is to be understood by the skilled person as being synonymous to "The ... of any one of embodiments 1, 2, 3, and 4". Further, it is explicitly noted that the following set of embodiments is not the set of claims determining the extent of protection, but represents a suitably structured part of the description directed to general and preferred aspects of the present invention.
1. A process for manufacture of a flooring, at least comprising the steps of
   (i) optionally applying a primer composition to a surface and permitting the primer composition to at least partially dry to form a layer (LP);
   (ii) applying a composition (C) suitable to form a layer (L) comprising foamed particles comprising a thermoplastic polyurethane to the layer (LP)
   (iii) applying a reactive coating composition to the layer (L) comprising foamed particles and permitting the reactive coating composition to react and at least partially dry to form a layer (LB)
2. The process according to embodiment 1, further comprising a step (iv):
   (iv) applying a second reactive coating and permitting the reactive coating composition to react and at least partially dry to form a layer (LT).
3. The process according to embodiment 1 or 2 wherein the composition (C) comprises fused foamed particles comprising a thermoplastic polyurethane.
4. The process according to embodiment 1 or 2 wherein the composition (C) comprises a reactive coating composition and foamed particles comprising a thermoplastic polyurethane.
5. The process according to any one of embodiments 1 to 4, wherein the surface is a floor.
6. The process according to any one of embodiments 1 to 5, wherein the primer composition is an epoxy or urethane based primer composition.
7. The process according to any one of embodiments 1 to 6, wherein the primer, when dried, has a thickness in the range of from 0.01 mm to 1 mm.
8. The process according to any one of embodiments 1 to 7, wherein the reactive coating composition and/or the second reactive coating composition is a reactive compositions to form a polyurethane, an epoxide resin or an acrylate polymer.
9. The process according to one of embodiments 1 to 8, wherein layer (L) has a thickness in the range of from 3 to 12 mm, in particular in the range of from 4 to 6 mm.
10. The process according to any one of embodiments 1 to 9, wherein in step (iii) the reactive composition is applied in a thickness in the range of from 5 to 15 mm.
11. Flooring obtained by a process according to any one of embodiments 1 to 10.
12. Flooring obtained by a process, at least comprising the steps of
   (i) optionally applying a primer composition to a surface and permitting the primer composition to at least partially dry to form a layer (LP);
   (ii) applying a composition (C) suitable to form a layer (L) comprising foamed particles comprising a thermoplastic polyurethane to the layer (LP)
   (iii) applying a reactive coating composition to the layer (L) comprising foamed particles and permitting the reactive coating composition to react and at least partially dry to form a layer (LB)
13. The flooring according to embodiment 12, further comprising a step (iv):
   (iv) applying a second reactive coating and permitting the reactive coating composition to react and at least partially dry to form a layer (LT).
14. The flooring according to embodiment 12 or 13 wherein the composition (C) comprises fused foamed particles comprising a thermoplastic polyurethane.
15. The flooring according to embodiment 12 or 13 wherein the composition (C) comprises a reactive coating composition and foamed particles comprising a thermoplastic polyurethane.
16. The flooring according to any one of embodiments 12 to 15, wherein the surface is a floor.
17. The flooring according to any one of embodiments 12 to 16, wherein the primer composition is an epoxy or urethane based primer composition.
18. The flooring according to any one of embodiments 12 to 17, wherein the primer, when dried, has a thickness in the range of from 0.01 mm to 1 mm.
19. The flooring according to any one of embodiments 12 to 18, wherein the reactive coating composition and/or the second reactive coating composition is a reactive compositions to form a polyurethane, an epoxide resin or an acrylate polymer.
20. The flooring according to one of embodiments 12 to 19, wherein layer (L) has a thickness in the range of from 3 to 12 mm, in particular in the range of from 4 to 6 mm.
21. The flooring according to any one of embodiments 12 to 20, wherein in step (iii) the reactive composition is applied in a thickness in the range of from 5 to 15 mm.
22. Flooring according to any one of embodiments 12 to 21 comprising a continuous layer which essentially consists of fused foamed particles comprising a thermoplastic polyurethane.
23. Use of foamed particles comprising a thermoplastic polyurethane in a flooring.
24. A process for manufacture of a flooring, at least comprising the steps of
   (i) optionally applying a primer composition to a surface and permitting the primer composition to at least partially dry to form a layer (LP);
   (ii) applying a layer (L) comprising fused foamed particles comprising a thermoplastic polyurethane to the layer (LP)
   (iii) applying a reactive coating composition to the layer (L) comprising fused foamed particles and permitting the reactive coating composition to react and at least partially dry to form a layer (LB).
25. The process according to embodiment 24, further comprising a step (iv):
   (iv) applying a second reactive coating composition to the layer (LB) and permitting the reactive coating composition to react and at least partially dry to form a layer (LT).
26. The process according to embodiment 24 or 25, wherein the surface is a floor.
27. The process according to any one of embodiments 24 to 26, wherein the primer composition is an epoxy or urethane based primer composition.
28. The process according to any one of embodiments 24 to 27, wherein the primer, when dried, has a thickness in the range o from 0.01 mm to 1 mm.
29. The process according to any one of embodiments 24 to 28, wherein the reactive coating composition and/or the second reactive coating composition is a reactive compositions to form a polyurethane, an epoxide resin or an acrylate polymer.
30. The process according to any one of embodiments 24 to 29, wherein the layer (L) comprises one or more mats comprising fused foamed particles comprising a thermoplastic polyurethane.
31. The process according to embodiment 30, wherein the mats are joined by fusing or gluing.
32. The process according to one of embodiments 30 or 31, wherein the mats have a thickness in the range of from 3 to 12 mm, in particular in the range of from 4 to 6 mm.
33. The process according to any one of embodiments 24 to 32, wherein in step (iii) the reactive composition is applied in a thickness in the range of from 5 to 15 mm.
34. Flooring obtained by a process according to any one of embodiments 24 to 33.
35. Flooring obtained by a process, at least comprising the steps of
   (i) optionally applying a primer composition to a surface and permitting the primer composition to at least partially dry to form a layer (LP);
   (ii) applying a layer (L) comprising fused foamed particles comprising a thermoplastic polyurethane to the layer (LP)
   (iii) applying a reactive coating composition to the layer (L) comprising fused foamed particles and permitting the reactive coating composition to react and at least partially dry to form a layer (LB).
36. The flooring according to embodiment 35, further comprising a step (iv):
   (iv) applying a second reactive coating composition to the layer (LB) and permitting the reactive coating composition to react and at least partially dry to form a layer (LT).
37. The flooring according to embodiment 35 or 36, wherein the surface is a floor.
38. The flooring according to any one of embodiments 35 to 37, wherein the primer composition is an epoxy or urethane based primer composition.
39. The flooring according to any one of embodiments 35 to 38, wherein the primer, when dried, has a thickness in the range o from 0.01 mm to 1 mm.
40. The flooring according to any one of embodiments 35 to 39, wherein the reactive coating composition and/or the second reactive coating composition is a reactive compositions to form a polyurethane, an epoxide resin or an acrylate polymer.
41. The flooring according to any one of embodiments 35 to 40, wherein the layer (L) comprises one or more mats comprising fused foamed particles comprising a thermoplastic polyurethane.
42. The flooring according to embodiment 41, wherein the mats are joined by fusing or gluing.
43. The flooring according to one of embodiments 41 or 42, wherein the mats have a thickness in the range of from 3 to 12 mm, in particular in the range of from 4 to 6 mm.
44. The flooring according to any one of embodiments 35 to 43, wherein in step (iii) the reactive composition is applied in a thickness in the range of from 5 to 15 mm.
45. Flooring according to any one of embodiments 34 to 44 comprising a continuous layer which essentially consists of fused foamed particles comprising a thermoplastic polyurethane.
46. Use of fused foamed particles comprising a thermoplastic polyurethane in a flooring.

The following examples do not limit the scope of the present invention.

### Examples

### I. Typical flooring material according to the state of the art:

Standard materials typically consist of the following layers:
1. Primer layer
2. Adhesive for REG-mats,
3. REG-mats (thickness 4 or 6 mm), commercially available under the trade name MasterTop Mat 6
4. Sealant for REG-mats
5. scratch coat (BC 361 N-Basis)
6. 2. coating with 2,5-3 kg/m²
7. optional: sealing layer 0,12 kg/m²

### II. Preparation of eTPU

### 1. TPU synthesis

The synthesis of the TPU precursor was carried out using a 48D (12 zones) twin-screw-extruder (ZSK58 MC, co. Coperion). The temperature of the extruder housing / zones was between 150 to 230 °C and a screw-speed of 180 to 240 1/min at a through-put of 180 - 220 kg/h. In the first zone the polyol, chain extender, catalyst and diisocyanate was added. Further additives were added in zone 8. The formulation is listed in table 1.

After a gear pump and a melt filter the polymer melt at 180-210 °C was granulated using an underwater granulation. The granulate was subsequently dried using a heating fluidized bed (40-90 °C).

**Table 1*: Formulation of the used precursor.**

| Ingredients | TPU 1 |
|---|---|
| Polyether based polyol having an OH-number of 112,2 and primary OH groups (based on tetramethylene oxide, functionality: 2) [parts] | 1000 |
| aromatic Isocyanate (4,4'-methylene diphenyl diisocyanate) [parts] | 500 |
| 1,4-butanediol [parts] | 89.9 |
| Stabilizer [parts] | 25 |
| Tin II isooctoate (50% in dioctyl adipate) [parts] | 50 ppm |

### 2. eTPU preparation

The manufacturing of E-TPU was carried out on a twin screw extruder (Berstorff ZE 40) having a screw diameter of 44 mm and a LID of 48, followed by a melt pump, a starting valve with screen changer, a die plate and an underwater pelletizer. The TPU was predried according to the processing guide at 80 °C for 3 hours for a residual humidity lower than 0,02 wt. %. The content in wt. % of the total throughput was adapted according to table 2*.

The materials were dosed by gravimetric dosing units into the main feed of the twin screw extruder. After the dosing, the material was molten and mixed in the extruder and afterwards a mixture of CO₂ and N₂ was added as blowing agents. In the remaining extruder barrels, the polymer and the blowing agents were mixed into a homogenous mixture. The mixture is pressed by a melt pump to a starting valve including screen changer and finally through a die plate into the water box of an underwater pelletizing system. There the mixture is cut to granulates, and foamed in the pressurized, tempered water system. The water flow transports the beads to a centrifuge dryer where they are separated from the water stream. The total throughput was set to 40 kg/h (including polymers, blowing agents).

In the following table 2*, the individual settings and material compositions can be seen.

**Table 2*: Temperature profile of machine parts**

| eTPU pellets | TPU used | GPPS content (wt. %) | Temperature extruder (°C) | Temperature staring valve (°C) | Temperature die plate (°C) | Pressure underwater pelletizer (bar) | Temperature underwater pelletizer (°C) |
|---|---|---|---|---|---|---|---|
| Example 1 | TPU 1 | 7.5 | 170 - 220 | 175 | 220 | 15 | 55 |
| Example 2 | TPU 1 | 12.5 | 190-220 | 185 | 220 | 15 | 55 |

The blowing agent compositions of CO₂ and N₂ that were used are listed in the following table 3*. The amounts of the blowing agents are calculated on the total throughput of polymers.

**Table 3*: Blowing agent compositions for foaming**

| eTPU pellets | CO2 [Gew. %] | N2 [Gew. %] |
|---|---|---|
| Example 1 | 2.3 | 0.1 |
| Example 2 | 2.3 | 0.1 |

The resulting bulk density of the expanded beads can be found in table 4*.

**Table 4*: Resulting Bulk Density**

| eTPU pellets | Bulk density (g/l) |
|---|---|
| Example 1 | 124 ±6 |
| Example 2 | 119 ± 5 |

The E-TPU's used as examples and comparative examples are characterized in table 5*. The average length and the average surface area to average volume ration are determined as explained in method example 1 and 2.

**Table 4*: Average Length and Average surface area / average volume ration of the E-TPU's used as examples and comparative examples**

| eTPU pellets | Particle mass [mg] | Average Length |
|---|---|---|
| Example 1 | 4 | 3.8 |
| Example 2 | 4 | 3.8 |

### 3. Preparation of mats

The foamed pellets may be molded on a steam chest molder type Boost Energy Foamer K68 from company Kurtz ersa GmbH to quadratic plates (example plates 1 - 2 and comparative example plates 1 - 2) with the dimension of 200 * 200 * 10 mm and 200 * 200 * 20 mm (dimensions could vary slightly due to shrinkage). Molding conditions are presented in table 6*.

**Table 6*: Steaming conditions during steam chest molding**

| Molded plate | Example plate 1 |
|---|---|
| E-TPU | Example 1 |
| Crack size -10 / 20 mm plate (mm) | 10/ 20 mm |
| Cross steam static side (bar) | 1.2 |
| Cross steam static side (s) | 7 |
| Cross steam movable side (bar) | 1.2 |
| Cross steam movable side (s) | 5 |
| Autoclave steam static /movable side (bar) | 1.3 / 1.45 |
| Autoclave steam (s) | 40 |
| Cooling time* - 10/20 mm plate | 100/120 |

### III. Examples

### 1. Materials used

| | | |
|---|---|---|
| Polyol 1 | polyoxypropylene triol, Mn 3033, EEW 1011 | |
| Polyol 2 | reaktives polyether triol, Mn 6000, EEW 2077 | |
| Polyol 3 | bifunctional polyetherpolyol | |
| Iso 1 | | mixture of 4,4-, 2,4- und 2,2-MDI |
| Iso 2 | | isocyanate composition, NCO 31,8%; EEW 132 |
| Iso 3 | | isocyanate composition, NCO 10%, EEW 420 |

**Table A: Composition used for part A**

| **Materials** | **Coating 1 Part A** | **Coating 2 Part A** | **Coating 2 with Mini-Infinergy Part A** | **Coating 2 with Serien-Infinergy Part A** | **Coating 3** (Coating 2 with standard Infinergy/Castor oil based) Part A | **Coating 4** (Coating 2 with standard Infinergy/PTHF oil based) **Part A** |
|---|---|---|---|---|---|---|
| Castor Oil | 36 | 36.00 | 33.83 | 33.84 | 18.00 | |
| Poly THF 650 | | | | | | 59.91 |
| Polyol 02 | 27.50 | | | | 41.05 | |
| Polyol 01 | | 27.50 | 24.20 | 25.85 | | |
| Colour | 0.50 | 0.50 | 0.44 | 0.47 | | |
| Additives and catalyst | 10.90 | 10.90 | 9.59 | 10.25 | 0.86 | |
| Molecular sieve | 5.00 | 5.00 | 4.40 | 4.70 | 4.72 | 5.00 |
| Flame retardant | 15.10 | 15.10 | 13.29 | 14.19 | 10.85 | 20.00 |
| Microspheres with low density | 5.00 | 5.00 | 2.25 | 4.70 | 4.72 | 2.67 |
| | | | | | | |
| Mini-Infinergy LJ 8602/6/2, Ch:DE23 | | | 12.00 | | 0.00 | 0.00 |
| Infinergy Partikel Serienware, 210 MP | | | | 6.00 | 9.62 | 9.62 |
| Polystyrene pellets | | | | | 0.94 | 1.30 |
| Midisphere | | | | | 6.60 | |
| PE-fibrous filler | | | | | 2.64 | 1.50 |
| 100% | 100.00 | 100.00 | 100.00 | 100.00 | 100.00 | 100.00 |

**Table B: composition used for Part B**

| **materials** | **Coating 1 Part B** | **Coating 2 Part B** | **Coating 2 Part B** | **Coating 2 Part B** | **Coating 3 Part B** | **Coating 4 Part B** |
|---|---|---|---|---|---|---|
| Iso 1 | 45.10 | | | | | |
| Polyol 3 | 57.39 | | | | | |
| Stabilizer | 0.10 | | | | | |
| Iso 2 | | 20.00 | 20.00 | 20.00 | 20.00 | 20.00 |
| Iso 3 | | 80.00 | 80.00 | 80.00 | 80.00 | 80.00 |
| **100%** | **102.59** | **100.00** | **100.00** | **100.00** | **100.00** | **100.00** |
| | | | | | | |
| **ratio (A):(B)** | **100:44** | **100:44** | **100:44** | **100:44** | **100:25** | **100:58** |

### 2. Flooring including infinergy mats

### 2.1 The layers could be applied in 4 working days. The total thickness is about 6 mm

On day 1, a primer is applied on a concrete surface (0,4 kg/m²). The Infinergy mats can be applied after 6 hours. On day 2, the body coat is applied in an amount of 2,5 kg/m². On day 3, a sealing is applied in an amount of 0,1 kg/m².

### 2.2 Sample for sound absorbing test

A sample (80x100x0.5 cm) was taken from an Infinergy mat (type 32-100 U 10) and sealed at the edges. On the surface of the mat, 2,5 Kg of the bodycoat were applied and spread out. A sealing was applied afterwards in an amount of 0.1 kg/m². the sample was cured at room temperature for 7 days and the testing was conducted directly after curing.

The materials used are summarized in table 1.

**Table 1: materials for sample 1**

| | **Sample 1** | | **day** |
|---|---|---|---|
| | | | |
| Primer | Epoxid based Primer | 0.4 kg/m² | 1 |
| Elastic underlayment | Infinergy-mats | | 1 |
| Body coat | standard | 2.5 kg/m² | 2 |
| Top coat | aqueous PU-based sealing | 0.100 kg/m² | 3 |
| | | | |
| | **Total thickness 6 -6.5 mm** | | |

The sound impact tests were carried out according to DIN EN ISO 140 8.

Results of the sound absorbing test: -20 dB

The results of the impact test are summarized in table 2.

**Table 2: Results of the impact test:**

| 2,5 hours, 50 Kg | | | 16 hours, 50 Kg | | |
|---|---|---|---|---|---|
| Impact test after removal of weight, mm | Impact test 10min after removal of weight, mm | Impact test 24h after removal of weight, mm | Impact test after removal of weight, mm | Impact test 10min after removal of weight, mm | Impact test 24h after removal of weight, mm |
| edge: 4.21 | edge: 3.44 | edge: 0.21 | edge: 4.25 | edge: 3.75 | edge: 0.13 |
| middle: 4.81 | middle: 3.36 | middle: 0.20 | middle: 5.20 | middle: 4.79 | middle: 0.31 |

No cracks were observed; remaining dents of 0.20-0.30 mm are acceptable.

### 3. Flooring including Infinergy particles

### 3.1 Use of Mini-infinergy

Two examples were prepared to show the effect of the addition of Mini-Infinergy pellets in the elastic underlayer.

### 3.1.1 Reference example Sample 2.1

The layers applied are summarized in table 3.

**Table 3**

| | | | day |
|---|---|---|---|
| Primer | Epoxid based Primer | 0.4 Kg/m² | 1 |
| Elastic underlayment | Composition 2 (composition of Part A and B according to table A and B) | 1.8 Kg/m² | 2 |
| Body coat | 2nd coating | 2.5 Kg/m² | 3 |
| Top coat | aqueous PU-based sealing | 0.10 Kg/m² | 4 |
| | | | |
| Total thickness ca. 4-5 mm | | -15 dB, variation ± 1 dB | |

### 3.1.2 Sample 2 according to the invention

The layers applied are summarized in table 4.

**Table 4**

| | | | day |
|---|---|---|---|
| Primer | Epoxid based Primer | 0.4 Kg/m² | 1 |
| Elastic underlayment | Composition 2 (composition of Part A and B according to table A and B) | 2.7 Kg/m² | 2 |
| Body coat | 2nd coating | 2.5 Kg/m² | 3 |
| Top coat | aqueous PU-based sealing | 0.10 Kg/m² | 4 |
| | | | |
| | Total thickness ca. 6-7 mm | -20 dB | |
| | | | |

### 3.2 Measurement of the sound absorbing properties

A plate (80x100) was covered with a teflon sheet and sealed at the edges to avoid spilling/spreading of the material applied.

On day 1, the primer was applied in an amount of 0.4 kg/m². At day 2, 2.88 kg of the standard material of coating 2, parts A and B were mixed and 400 g of Mini-Infinergy pellets were added to the fluid mixture (sample LJ 8602) and stirred for 3 to 5 minutes to obtain a homogeneous mixture. 2.7 kg of the mixture were applied to the plate and spread out homogeneously using a blade.

On day 3, the 2^{nd} coating was applied in an amount of 2.5 kg. 24 hours later, the top coat was applied in an amount of 0.1 kg/m².

Thickness of the sample (3 measurements 6.7 mm; 6.2 mm; 6.3 mm ) on average 6-7mm

The sound impact tests were carried out according to DIN EN ISO 140 8.

Results of the sound absorbing test: -20 dB

The results of the impact test are summarized in table 5.

**Table 5: Results of the impact test:**

| 2.5 hours, 50 Kg | | | 16 hours, 50 Kg | | |
|---|---|---|---|---|---|
| Impact test after removal of weight, mm | Impact test 10min after removal of weight, mm | Impact test 24h after removal of weight, mm | Impact test after removal of weight, mm | Impact test 10min after removal of weight, mm | Impact test 24h after removal of weight, mm |
| 0.86 | 0.18 | 0.03 | 1.42 | 0.03 | 0.03 |

No cracks, almost no dents.

### 3.2 Use of standard Infinergy

3.2.1 An example was prepared to show the effect of the addition of Infinergy pellets in the elastic underlayer.

The layers applied are summarized in table 6.

**Table 6**

| | **Sample #3** | | **days** |
|---|---|---|---|
| | | | |
| Primer | Epoxid based Primer | 0.4 kg/m² | 1 |
| Elastic underlayer | Composition 2 ((composition of Part A and B according to table A and B) | 2 kg/m² | 2 |
| Body coat | 2nd coating | 2.5 kg/m² | 3 |
| Top coat | aqueous PU-based sealing | 0.10 kg/m² | 4 |
| | | | |
| | **Total thickness ca. 6-7 mm** | | |
| | | | |

### 3.2.2 Measurement of the sound absorbing properties

A plate (80x100) was covered with a teflon foil and sealed at the edges to avoid spilling/spreading of the material applied.

On day 1, the primer was applied in an amount of 0.4 kg/m². At day 2, 2.5 kg of the standard material of coating 2, parts A and B were mixed and 250 g of Infinergy MB 310 pellets were added to the fluid mixture (sample LJ 8602) and stirred for 3 to 5 minutes to obtain a homogeneous mixture. 2.7 kg of the mixture were applied to the plate and spread out homogeneously using a blade.

On day 3, the 2^{nd} coating was applied in an amount of 2.5 kg. 24 hours later, the top coat was applied in an amount of 0.1 kg/m².

Thickness of the sample (3 measurements 6.09 mm; 6.62 mm; 6.61 mm ) on average 6-6.6 mm

The sound impact tests were carried out according to DIN EN ISO 140 8.

Results of the sound absorbing test: -18 dB

The results of the impact test are summarized in table 7.

**Table 7: Results of the impact test**

| 2,5 hours, 50 Kg | | | 16 hours, 50 Kg | | |
|---|---|---|---|---|---|
| Impact test after removal of weight, mm | Impact test 10min after removal of weight, mm | Impact test 24h after removal of weight, mm | Impact test after removal of weight, mm | Impact test 10min after removal of weight, mm | Impact test 24h after removal of weight, mm |
| -3,76 | -1,58 | -0,12 | -4,88 | -2,30 | -0,32 |

Also longer stress for 16 hours did not result in cracks, remaining dents of 0.20-0.30 mm are acceptable.

3.2.3 Further samples were prepared using the procedure as described for sample #3. The compositions used for ter elastic underlayer are summarized in tales A and B.

The results of the samples tested are summarized in table 8.

**Table 8: Properties of the samples tested**

| | Sound aborbing properties | Total thickness | Impact test | Mode of application |
|---|---|---|---|---|
| Coating 1 | -19 dB | 4-5 mm | Failed | Standard self-levelling coating |
| Coating 2 | -15 dB | 4-5 mm | passed | Standard self-levelling coating |
| Coating 2 with Mini-Infinergy | -20 dB | 6-7 mm | passed | Standard self-levelling coating |
| Coating 2 with standard Infinergy | -16 dB | 6-6,5 mm | passed | Application of composition using a blade |
| Coating 2 with standard Infinergy/Castor oil based | -19 dB | 6-7,5 mm | passed | Application of composition using a blade |
| Coating 2 with standard Infinergy/PTHF based | -20 dB | 5-6 mm | passed | Application of composition using a blade |

### Literature cited:

WO 2007/82838
WO 2013/153190
WO 2015/052265
WO 2015/0124587

## Claims

1. A process for manufacture of a flooring, at least comprising the steps of
(i) optionally applying a primer composition to a surface and permitting the primer composition to at least partially dry to form a layer (LP);
(ii) applying a composition (C) suitable to form a layer (L) comprising foamed particles comprising a thermoplastic polyurethane to the layer (LP)
(iii) applying a reactive coating composition to the layer (L) comprising foamed particles and permitting the reactive coating composition to react and at least partially dry to form a layer (LB)

2. The process according to claim 1, further comprising a step (iv):
(iv) applying a second reactive coating and permitting the reactive coating composition to react and at least partially dry to form a layer (LT).

3. The process according to claim 1 or 2 wherein the composition (C) comprises fused foamed particles comprising a thermoplastic polyurethane.

4. The process according to claim 1 or 2 wherein the composition (C) comprises a reactive coating composition and foamed particles comprising a thermoplastic polyurethane.

5. The process according to any one of claims 1 to 4, wherein the surface is a floor.

6. The process according to any one of claims 1 to 5, wherein the primer composition is an epoxy or urethane based primer composition.

7. The process according to any one of claims 1 to 6, wherein the primer, when dried, has a thickness in the range of from 0.01 mm to 1 mm.

8. The process according to any one of claims 1 to 7, wherein the reactive coating composition and/or the second reactive coating composition is a reactive compositions to form a polyurethane, an epoxide resin or an acrylate polymer.

9. The process according to one of claims 1 to 8, wherein layer (L) has a thickness in the range of from 3 to 12 mm, in particular in the range of from 4 to 6 mm.

10. The process according to any one of claims 1 to 9, wherein in step (iii) the reactive composition is applied in a thickness in the range of from 5 to 15 mm.

11. Flooring obtained by a process according to any one of claims 1 to 10.

12. Flooring according to claim 11 comprising a continuous layer which essentially consists of fused foamed particles comprising a thermoplastic polyurethane.

13. Use of foamed particles comprising a thermoplastic polyurethane in a flooring.
